# EUROPEAN PATENT SPECIFICATION

(11) **EP 1 649 690 B1**
(45) Date of publication and mention of the grant of the patent: **22.01.2014**
(21) Application number: 04774148.3
(22) Date of filing: 19.07.2004
(51) Int. Cl.: H04N 5/44, H04N 5/46

(54) **METHOD OF SCANNING CHANNEL OF DIGITAL TELEVISION**
VERFAHREN ZUR ABTASTUNG EINES DIGITAL-TV-KANALS
PROCEDE DE BALAYAGE DE CHAINES DE TELEVISION NUMERIQUE

(30) Priority: 28.07.2003 KR 2003052085
(43) Date of publication of application: 26.04.2006
(73) Proprietor: Samsung Electronics Co., Ltd., Suwon-si, Gyeonggi-do, 443-742 (KR)
(72) Inventor: Lee, Young-Jin, Incheon Metropolitan-city 401-071 (KR)
(74) Representative: Walaski, Jan Filip
(86) International application number: PCT/KR2004/001788
(87) International publication number: WO 2005/011266

(56) References cited:
- EP-A1- 1 280 275
- WO-A1-01/45257
- WO-A1-97/08861
- WO-A1-99/55087
- WO-A2-02/063866
- FR-A1- 2 592 543
- KR-A- 20010 051 645
- KR-A- 20010 089 119
- KR-Y1- 200 313 019
- US-A- 5 299 011
- US-A- 6 115 080
- US-B1- 6 369 857
- US-B1- 6 577 353

## Description

### Technical Field

The present invention relates to a method of operating a digital broadcasting receiver, and more particularly, to a method of scanning channels in a digital television, which sets a starting frequency of an initial digital channel and scans available broadcasting channels that are transmitted differently according to bandwidths.

### Background Art

Digital video broadcasting (DVB) is a standard of digital broadcasting commonly being developed by European countries, by which a digital television receives broadcasting transmitted digitally. Generally, the digital broadcasting receiver receives various frequency bands, that is, a plurality of broadcasting channels, and synchronizes a tuner of the digital television to a main frequency of the bandwidth, signals of which will be received, in order to receive the signals of the corresponding frequency band.

When digital broadcasting and analog broadcasting simultaneously take place, the broadcasting signals are sent at predetermined frequencies offset in order to be less affected by a neighboring channel that may include picture carriers of analog broadcasting. A receiving end of the receiver scans the channels in consideration of the transmitted frequency offset. However, since the frequency offset is different among the countries, available channels can be missed due to the frequency offset that is enacted when the channels are scanned.

In Europe, a continent where a plurality of broadcasting methods are performed, whether a 7MHz or an 8MHz channel bandwidth is being used in the initial scanning operation should be considered. Also, even though the bandwidth is considered in the initial scanning operation, there is a disadvantage in which the frequency offset needs to be identified in order to scan the available channel.

US 5,299,011 discloses a channel scanning method which can reduce the time taken to detect a synchronization signal from 780 ms to 360 ms. FR 2592543 A1 discloses a television tuner which can detect a broadcast standard. EP1280275 A1 discloses an automatic tuning apparatus which, in response to an analog synchronizing signal being detected in a physical channel, subjects a next physical channel to station detection without performing finer station detection on individual segments in that physical channel.

### Disclosure of Invention

### Technical Solution

According to the present invention, there is provided a method of scanning channels according to claim 1.

The present invention provides a method of scanning channels in a digital television, which sets a starting frequency of an initial digital channel and automatically scans available broadcasting channels that are transmitted differently according to bandwidths of the frequencies.

### Advantageous Effects

As described above, according to the present invention, when the frequency value, at which the initial digital channel is started, is set, the scanning process can be performed with a single algorithm, without applying different algorithms to the channel scanning operations of various countries, and all channels can be scanned.

### Description of Drawings

FIG. 1 is a block diagram of a channel scan device of a digital television; and
FIG. 2 is a flow chart of a method of scanning channels in the digital television according to the present invention.

### Best Mode

According to an aspect of the present invention, there is provided a method of scanning channels, which is an operating method of a digital broadcasting receiver, including: (a) setting a starting frequency at which an initial digital channel is started; (b) searching a first available channel by applying a predetermined scan step to the starting frequency; and (c) searching second through Nth available channels by applying a plurality of scan steps to a frequency that is found by jumping a predetermined bandwidth from the first available channel frequency.

The scan step in steps (b) and (c) may be a minimum unit of frequency generated by a local oscillator disposed in a tuner of the digital broadcasting receiver.

The scan step may be divided into first through fifth scan steps, the first scan step is moved as much as the minimun frequency generated by the local oscillator x -2 from the main frequency, the second scan step is moved as much as the minimum frequency generated by the local oscillator x -1 from the main frequency, the third scan step is moved as much as the minimum frequency generated by the local oscillator x 0 from the main frequency, the fourth scan step is moved as much as the minimum frequency generated by the local oscillator x 1 from the main frequency, and the fifth scan step is moved as much as the minimum frequency generated by the local oscillator x 2 from the main frequency to search the available channels at the frequency regions.

Step (c) may be repeated until all available channels are scanned in the broadcasting frequency band.

Step (c) may include (c-1) jumping from the first available channel frequency by the first bandwidth to search the second available channel by applying the scan step to the frequency, (c-2) if the second available channel is found, jumping by the first bandwidth unit to search third through Nth available channels by applying the scan steps to the frequencies, (c-3) if the second available channel is not found in step (c-), jumping by the second bandwidth from the first available channel frequency to search the second available channel by applying the scan step to the frequency, and (c-4) if the second available channel is found, jumping by the second bandwidth unit to search third through Nth available channels by applying the scan steps to the frequencies.

### Mode for Invention

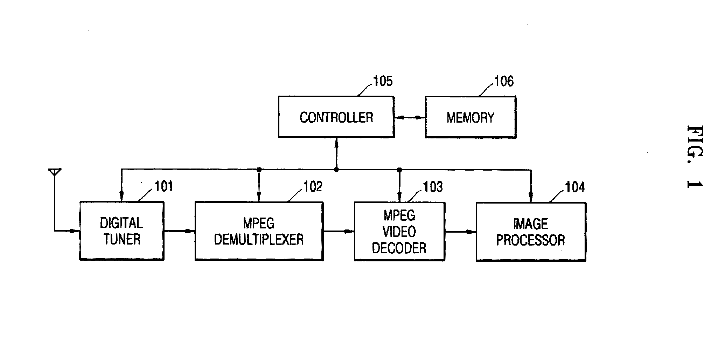

FIG. 1 is a block diagram of a channel scan device of a digital television. A channel scan device of the present invention includes a digital tuner 101, a motion picture experts group (MPEG) demultiplexer 102, an MPEG decoder 103, an image processor 104, a controller 105, and a memory 106.

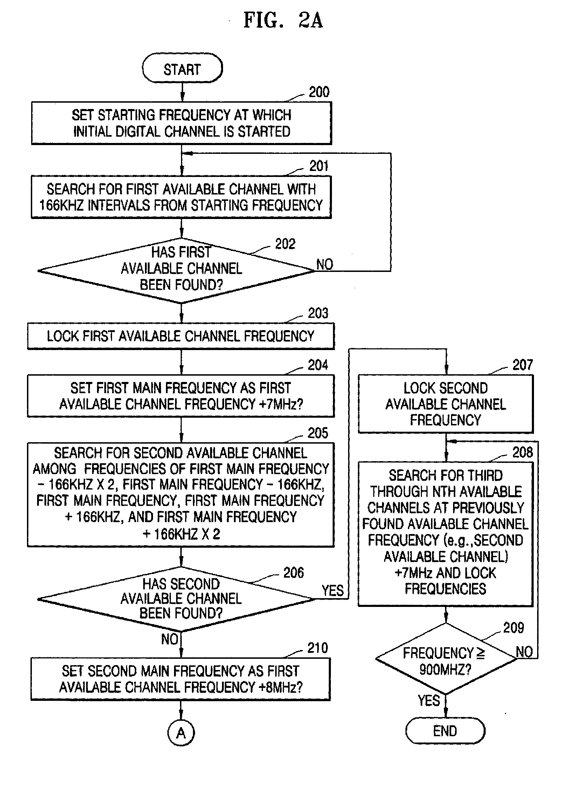

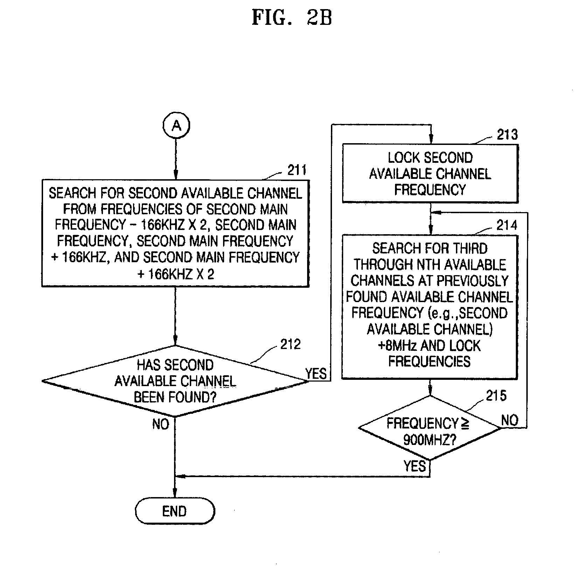

FIG. 2 is a flow chart of a method of scanning channels in a digital television according to the present invention. The method of scanning channels according to the present invention includes setting a starting frequency at which an initial digital channel is started (200), searching for a first available channel at a 166[KHz] interval from the starting frequency (201), deciding whether the first available channel has been found (202), locking the frequency at which the first available channel is searched (203), jumping by 7[MHz] from the frequency at which the first available channel is locked (204), setting the first available channel frequency + 7[MHz] as a first main frequency, and searching for an available channel second to the first main frequency - 166[KHz]x2, the first main frequency - 166[KHz], the first main frequency, the first main frequency + 166[KHz], and the first main frequency + 166{KHz} x 2 (205), deciding whether the second available channel has been found (206), locking the frequency at which the second available channel is searched in a case where the second available channel is found (207), jumping by 7[MHz] from the locked frequency to search third ∼ Nth available channels and locking the frequencies (208), deciding whether the frequency is 900[MHz] or larger (209), jumping by 8[MHz] from the first available channel frequency in a case where the available channel is not found by jumping from the first available channel frequency by 7[MHz] (210), setting the first available channel frequency + 8[MHz] as a second main frequency, and searching the second available channel from the second main frequency - 166[KHz] x 2, second main frequency - 166[KHz], second main frequency, second main frequency + 166[KHz], second main frequency 166[KHz] x 2 (211), deciding whether the second available channel has been found (212), locking the frequency at which the second available channel is searched in a case where the second available channel is found (213), jumping by 8[MHz] from the locked frequency to search third - Nth available channels and locking the frequencies (214), and deciding whether the frequency is 900[MHz] or larger (215).

The present invention will be described in more detail with reference to FIGS. 1 and 2.

The digital tuner 101 selects and demodulates the digital broadcasting signals.

The MPEG demultiplexer 102 demultiplexes a transport stream which is made by multiplexing audio signals, video signals, and additional information.

The MPEG decoder 103 decodes the video signal in the output signal of the MPEG demiltiplexer 102.

The image processor 103 converts a YUV signal of the channel selected by the digital tuner 101 into RGB and Y/C signals.

The controller 105 fully controls the digital broadcasting signal processes, and specifically, controls a channel scanning process.

The memory stores the data, and more particularly, stores the channel scanning algorithm of the present invention and the locked channel frequencies.

The channel scanning method between the digital tuner 101 and the controller 105 will be described with reference to FIG. 2.

The controller 105 sets the starting frequency to where the initial digital channel is started (200). For example, in Europe, the channel bandwidth is set to 7[MHz] or 8[MHz]. However, when it is not known which of these bandwidths is set, the scanning operation is performed only with the starting frequency information. Generally, the broadcasting frequency is in a range of 470[MHz] to 862[MHz] of ultra high frequency (UHF), and the controller 105 sets the frequency at 470[MHz], a frequency at which the initial digital channel is started.

When the starting frequency is set, the controller 105 searches for the first available channel by scan step units from the starting frequency (step 201). The first available channel is searched by the controller 105 by moving from the starting frequency 470[MHz] at 166[KHz] scan steps. The scan step (166[KHz]) is the minimum unit of a local oscillating frequency, which is generated by a local oscillator (not shown) disposed in the tuner 101. As a result of moving by scan step units, it is assumed that the first available channel, No. 21, is started at the frequency of 474[MHz].

When the first available channel is found, the controller 105 locks the frequency at the frequency at which the first available channel is found and stores the locked frequency in the memory 106 (step 203).

The controller 105 jumps upwardly by 7[MHz] from the locked first available channel frequency (step 204).

The controller 105 sets the first available channel frequency of + 7[MHz] as the first main frequency, and searches for available channels by applying first through fifth scan steps on the first main frequency (step 205). As described above, the scan step is the minimum unit (166[KHz]) of the local oscillating frequency generated by the local oscillator (not shown) disposed in the tuner 101. The first scan step is 166[KHz] x -2 and is applied to the first main frequency. The second scan step is 166[KHz] x -1 and is applied to the first main frequency. The third scan step is 166[KHz] x 0 and is applied to the first main frequency. The fourth scan step is 166[KHz] x 1 and is applied to the first main frequency. And, the fifth scan step is 166[KHz] x 2 and is applied to the first main frequency. The controller 105 searches for the available channel from the first main frequency - 166[KHz]x2, the first main frequency-166[KHz], the first main frequency, the first main frequency + 166[KHz], and the first main frequency + 166[KHz]x2. For example, when it is assumed that the first available channel is found at 474[MHz], the controller 105 sets 474[MHz]+7[MHz] = 481[MHz] as the first main frequency, and searches for the second available channel from 481[MHz] - 332[KHz], 481[MHz] - 166[KHz], 481[MHz], 481 [MHz]+166[KHz], and 481[MHz] + 332[KHz].

When the second available channel is found by applying the first through fifth scan steps to the first main frequency, the controller 105 locks the frequency at the frequency at which the available channel is found and stores the frequency in the memory 106 (step 207).

In addition, the controller 105 jumps by 7[MHz] units from the locked frequency channel to search for third through Nth available channels by applying the first through fifth scan steps, and locks the found available channels (step 208).

When the frequency of 900[MHz] or greater is found, the controller 105 decides that the frequency is an abnormal broadcasting signal frequency band and terminates the scanning process (step 209).

If the second available channel is not found by applying the first through fifth scan steps after jumping 7[MHz] from the first available channel frequency, the controller 105 jumps by 8[MHz] unit from the first available channel frequency (step 210). In the present invention, the jumping width of the frequency band is limited to 7[MHz] and 8[MHz], however, the bandwidth may be different for each country.

The controller 105 sets the first available channel frequency + 8[MHz] as the second main frequency, and searches for available channels by applying the first through fifth scan steps to the second main frequency (step 211). The scan step is the minimum unit (166[KHz]) of the local oscillating frequency generated by the local oscillator (not shown) disposed in the tuner 101. The first scan step is 166[KHz] x -2 and is applied to the second main frequency. The second scan step is 166[KHz] x -1 and is applied to the second main frequency. The third scan step is 166[KHz] x 0 and is applied to the second main frequency. The fourth scan step is 166[KHz] x 1 and is applied to the second main frequency. And the fifth scan step is 166[KHz] x 2 and is applied to the second main frequency. The controller 105 searches the available channel from the second main frequency - 166[KHz]x2, the second main frequency - 166[KHz], the second main frequency, the second main frequency + 166[KHz], and the second main frequency + 166[KHz]x2. For example, when it is assumed that the first available channel is found at 474[MHz], the controller 105 sets 474[MHz] +8[MHz] = 482[MHz] as the first main frequency, and searches for the second available channel from 482[MHz] - 332[KHz], 482[MHz] - 166[KHz], 482[MHz], 482[MHz]+166[KHz], and 482[MHz] + 332[KHz].

When the second available channel is found by applying the first through fifth scan steps to the second main frequency, the controller 105 locks the frequency at the frequency at which the available channel is found and stores the frequency in the memory 106 (step 213).

In addition, the controller 105 jumps by 8[MHz] unit from the locked frequency channel to search for third through Nth available channels by applying the first through fifth scan steps, and locks the found available channels (step 214).

When the frequency of 900[MHz] or greater is found, the controller 105 decides that the frequency is an abnormal broadcasting signal frequency band and terminates the scanning process (step 215).

## Claims

1. A method of scanning channels, which is a method of operating a digital broadcasting receiver, comprising:
setting (200) a starting frequency at which an initial digital channel is started;
searching a first available channel by adding a predetermined scan step (201) to the starting frequency, repeatedly determining (202) whether the first available channel has been found and adding the predetermined scan step (201) if the first available channel has not been found;
locking (203) the first available channel frequency when the first available channel has been found; and
searching (205, 208) second through Nth available channels in turn; and
locking (207) the frequency at which each of the second through Nth available channels is found as an available channel frequency,
wherein each one of the second through Nth available channels is searched by adding or subtracting (205) a plurality of scan steps to a frequency, which is found by jumping (204) by a predetermined bandwidth from the locked available channel frequency at which the previous available channel was found, and
wherein the predetermined scan step is selected to be substantially smaller than the bandwidth.

2. The method of claim 1, wherein the scan step is a minimum unit of frequency generated by a local oscillator disposed in a tuner of the digital broadcasting receiver.

3. The method of claim 2, wherein the scan step is divided into first through fifth scan steps, the first scan step is moved as much as the minimum frequency generated by the local oscillator x -2 from the main frequency, the second scan step is moved as much as the minimum frequency generated by the local oscillator x -1 from the main frequency, the third scan step is moved as much as the minimum frequency generated by the local oscillator × 0 from the main frequency, the fourth scan step is moved as much as the minimum frequency generated by the local oscillator × 1 from the main frequency, and the fifth scan step is moved as much as the minimum frequency generated by the local oscillator × 2 from the main frequency to search the available channels at the frequency regions.

4. The method of claim 1, wherein searching second through Nth channels comprises:
jumping from the first available channel frequency by the first bandwidth to search the second available channel by adding or subtracting the plurality of scan steps to the frequency;
if the second available channel is found, jumping by the first bandwidth unit to search third through Nth available channels by adding or subtracting the plurality of scan steps to the frequencies;
if the second available channel is not found, jumping by the second bandwidth from the first available channel frequency to search the second available channel by adding or subtracting the plurality of scan steps to the frequency; and
if the second available channel is found, jumping by the second bandwidth unit to search third through Nth available channels by adding or subtracting the plurality of scan steps to the frequencies.

## Patentansprüche

1. Verfahren zum Abtasten von Kanälen, wobei es sich um ein Verfahren zum Betreiben eines digitalen Rundfunkempfängers handelt, das Folgendes beinhaltet:
Einstellen (200) einer Anfangsfrequenz, bei der ein anfänglicher Digitalkanal gestartet wird;
Suchen eines ersten verfügbaren Kanals durch Addieren eines vorbestimmten Suchschrittes (201) zu der Anfangsfrequenz, wiederholtes Ermitteln (202), ob der erste verfügbare Kanal gefunden wurde, und Addieren des vorbestimmten Suchschrittes (201), wenn der erste verfügbare Kanal nicht gefunden wurde;
Festhalten (203) der ersten verfügbaren Kanalfrequenz, wenn der erste verfügbare Kanal gefunden wurde; und
Suchen (205, 208) von zweiten bis N^{ten} verfügbaren Kanälen nacheinander; und
Festhalten (207) der Frequenz, auf der jeder der zweiten bis Nten verfügbaren Kanäle gefunden wird, als verfügbare Kanalfrequenz,
wobei jeder der zweiten bis N^{ten} verfügbaren Kanäle durch Addieren oder Subtrahieren (205) mehrerer Suchschritte zu einer Frequenz gesucht wird, die durch Springen (204) um eine vorbestimmte Bandbreite von der festgehaltenen verfügbaren Kanalfrequenz gefunden wird, bei der der vorherige verfügbare Kanal gefunden wurde, und
wobei der vorbestimmte Suchschritt so gewählt wird, dass er erheblich kleiner ist als die Bandbreite.

2. Verfahren nach Anspruch 1, wobei der Suchschritt eine Mindestfrequenzeinheit ist, die durch einen Lokaloszillator erzeugt wird, der in einem Tuner des digitalen Rundfunkempfängers vorgesehen ist.

3. Verfahren nach Anspruch 2, wobei der Suchschritt in erste bis fünfte Suchschritte unterteilt wird, der erste Suchschritt um die vom Lokaloszillator erzeugte Mindestfrequenz x -2 von der Hauptfrequenz bewegt wird, der zweite Suchschritt um die vom Lokaloszillator erzeugte Mindestfrequenz x -1 von der Hauptfrequenz bewegt wird, der dritte Suchschritt um die vom Lokaloszillator erzeugte Mindestfrequenz x 0 von der Hauptfrequenz bewegt wird, der vierte Suchschritt um die vom Lokaloszillator erzeugte Mindestfrequenz x 1 von der Hauptfrequenz bewegt wird, und der fünfte Suchschritt um die vom Lokaloszillator erzeugte Mindestfrequenz x 2 von der Hauptfrequenz bewegt wird, um die verfügbaren Kanäle in den Frequenzregionen zu suchen.

4. Verfahren nach Anspruch 1, wobei das Suchen der zweiten bis N^{ten} Kanäle Folgendes beinhaltet:
Springen von der ersten verfügbaren Kanalfrequenz um die erste Bandbreite zum Suchen des zweiten verfügbaren Kanals durch Addieren oder Subtrahieren der mehreren Suchschritte zu der Frequenz;
Springen, wenn der zweite verfügbare Kanal gefunden wird, um die erste Bandbreiteneinheit zum Suchen der dritten bis N^{ten} verfügbaren Kanäle durch Addieren oder Subtrahieren der mehreren Suchschritte zu den Frequenzen;
Springen, wenn der zweite verfügbare Kanal nicht gefunden wird, um die zweite Bandbreite von der ersten verfügbaren Kanalfrequenz zum Suchen des zweiten verfügbaren Kanals durch Addieren oder Subtrahieren der mehreren Suchschritte zu der Frequenz; und
Springen, wenn der zweite verfügbare Kanal gefunden wird, um die zweite Bandbreiteneinheit zum Suchen der dritten bis N^{ten} verfügbaren Kanäle durch Addieren oder Subtrahieren der mehreren Suchschritte zu den Frequenzen.

## Revendications

1. Procédé de balayage de chaînes de télévision, lequel consiste à exploiter un récepteur de diffusion numérique, comprenant :
le réglage (200) d'une fréquence de départ à laquelle une chaîne numérique initiale est lancée ;
la recherche d'une première chaîne disponible en ajoutant une étape de balayage prédéterminée (201) à la fréquence de départ, la détermination répétée (202) que la première chaîne disponible a été trouvée ou non et l'ajout de l'étape de balayage prédéterminée (201) si la première chaîne disponible n'a pas été trouvée ;
le verrouillage (203) de la fréquence de la première chaîne disponible quand la première chaîne disponible a été trouvée ; et
la recherche (205, 208) consécutive d'une deuxième à une N^{ième} chaîne disponible ; et
le verrouillage (207) de la fréquence à laquelle chacune de la deuxième à la N^{ième} chaîne disponible est trouvée comme fréquence de chaîne disponible ;
dans lequel chacune de la deuxième à la N^{ième} chaîne disponible est recherchée en ajoutant (205) une pluralité d'étapes de balayage à une fréquence ou en soustrayant (205) une pluralité d'étapes de balayage d'une fréquence, laquelle est trouvée en sautant (204) par une largeur de bande prédéterminée de la fréquence de chaîne disponible verrouillée à laquelle la chaîne disponible précédente a été trouvée, et
dans lequel l'étape de balayage prédéterminée est sélectionnée pour être sensiblement inférieure à la largeur de bande.

2. Procédé selon la revendication 1, dans lequel l'étape de balayage est une unité de fréquence minimum générée par un oscillateur local disposé dans un syntoniseur du récepteur de diffusion numérique.

3. Procédé selon la revendication 2, dans lequel l'étape de balayage est divisée en une première à une cinquième étape de balayage, la première étape de balayage étant déplacée par autant que la fréquence minimum générée par l'oscillateur local x -2 de la fréquence principale, la seconde étape de balayage étant déplacée par autant que la fréquence minimum générée par l'oscillateur local x -1 de la fréquence principale, la troisième étape de balayage étant déplacée par autant que la fréquence minimum générée par l'oscillateur local x 0 de la fréquence principale, la quatrième étape de balayage étant déplacée par autant que la fréquence minimum générée par l'oscillateur local x 1 de la fréquence principale, et la cinquième étape de balayage étant déplacée par autant que la fréquence minimum générée par l'oscillateur local x 2 de la fréquence principale pour rechercher les chaînes disponibles aux régions de fréquences.

4. Procédé selon la revendication 1, dans lequel la recherche de la deuxième à la N^{ième} chaîne comprend :
le saut depuis la fréquence de la première chaîne disponible par la première largeur de bande pour rechercher la deuxième chaîne disponible en ajoutant la pluralité d'étapes de balayage à la fréquence ou en soustrayant la pluralité d'étapes de balayage de la fréquence ;
si la deuxième chaîne disponible est trouvée, le saut par la première unité de largeur de bande pour rechercher les troisième à la N^{ième} chaînes disponibles en ajoutant la pluralité d'étapes de balayage aux fréquences ou en soustrayant la pluralité d'étapes de balayage des fréquences ;
si la deuxième chaîne disponible n'est pas trouvée, le saut par la deuxième largeur de bande depuis la fréquence de la première chaîne disponible pour rechercher la deuxième chaîne disponible en ajoutant la pluralité d'étapes de balayage à la fréquence ou en soustrayant la pluralité d'étapes de balayage de la fréquence ; et
si la deuxième chaîne disponible est trouvée, le saut par la deuxième unité de largeur de bande pour rechercher les troisième à la N^{ième} chaînes disponibles en ajoutant la pluralité d'étapes de balayage aux fréquences ou en soustrayant la pluralité d'étapes de balayage des fréquences.
